# EUROPÄISCHE PATENTSCHRIFT

(11) **EP 1 784 617 B1**
(45) Veröffentlichungstag und Bekanntmachung des Hinweises auf die Patenterteilung: **08.10.2014**
(21) Anmeldenummer: 05770190.6
(22) Anmeldetag: 06.08.2005
(51) Int. Cl.: G01C 21/36, G06F 3/00, B60K 37/06

(54) **BEDIENVORRICHTUNG FÜR EIN KRAFTFAHRZEUG**
OPERATING DEVICE FOR A MOTOR VEHICLE
DISPOSITIF DE COMMANDE POUR UN VEHICULE A MOTEUR

(30) Priorität: 24.08.2004 DE 102004040886
(43) Veröffentlichungstag der Anmeldung: 16.05.2007
(73) Patentinhaber: Volkswagen Aktiengesellschaft, 38440 Wolfsburg (DE)
(72) Erfinder: FLIEGNER, Jens, 29399 Wahrenholz (DE); EBERT, Andreas, 38104 Braunschweig (DE)
(74) Vertreter: Geske, Kerstin
(86) Internationale Anmeldenummer: PCT/EP2005/008634
(87) Internationale Veröffentlichungsnummer: WO 2006/021319

(56) Entgegenhaltungen:
- EP-A1- 1 310 860
- WO-A-02/073587
- US-A1- 2003 058 265

## Beschreibung

Die Erfindung betrifft eine Bedienvorrichtung zur Bedienung einer Recheneinrichtung, insbesondere Bedienvorrichtung zur Bedienung einer Recheneinrichtung zur Steuerung von Funktionen in einem Kraftfahrzeug, wobei die Bedienvorrichtung ein Display zur optischen Darstellung von Informationen, einen über dem Display angeordneten Touchscreen zur Eingabe von Befehlen durch Berühren des Touchscreens und/oder durch Drücken auf den Touchscreen und einen Aktor zum Bewegen des Touchscreens umfasst.

Eine Anordnung aus einer Recheneinrichtung, einem Display, einem Touchscreen und einem Aktor zum Bewegen des Touchscreens offenbart die US 2003/0058265 A1.

Ein Touchscreen ist zudem z.B. aus der DE 201 02 197 U1 bekannt. In der DE 201 02 197 U1 ist ein Touchscreen zur Visualisierung von elektronischen Signalen und einer bestätigenden Berührungseingabe von Zeichen und Symbolen bestehend aus einer Funktionsebene zur Visualisierung und Tasteingabe und einer hierzu korrespondierenden, höher gelegenen, punktuell deformierbaren Schutzebene offenbart. Dabei wird bei einer Auswahl bestimmter Punkte der Funktionsebene mittels Berührung über die Schutzebene hinweg mindestens ein Bestätigungssignal für den Tastsinn (haptischer Reiz) des Benutzers wahrnehmbar an der Position des Berührungspunktes in der deformierten Schutzebene erzeugt und das Bestätigungssignal für den Tastsinn (haptischer Reiz) durch exzentrisch, inner- und/oder unterhalb der Funktionsebene angeordnete Schwingungselemente erzeugt. Zudem erfolgt bei dem aus der DE 201 02 197 U1 bekannten Touchscreen die Weiterleitung der erzeugten Schwingungen von der Funktions- auf die Schutzebene durch direkten Kontakt der beiden Ebenen und/oder über die Randbereiche der Ebenen durch starre oder elastische Verbindungselemente.
Einzelheiten zu Touchscreens können z.B. der Internetseite www.3m.com/3mtouchsystems/ entnommen werden.

Aus der DE 201 80 024 U1 bzw. der korrespondierenden WO 01/54109 A1 ist zur haptischen Rückkopplung zudem eine Berührungssteuerung mit haptischer Rückkopplung zur Eingabe von

Signalen in einen Computer und zur Ausgabe von Kräften an einen Benutzer der Berührungssteuerung bekannt, wobei die Berührungssteuerung ein Berührungseingabegerät aufweist, das eine annähernd ebene Berührungsoberfläche aufweist, die derart betrieben wird, dass sie aufgrund einer Position auf der Berührungsoberfläche, die ein Benutzer berührt, ein Positionssignal in einen Prozessor des Computers eingibt, wobei das Positionssignal die Position in zwei Dimensionen wiedergibt. Die Berührungssteuerung gemäß der WO 01/54109 A1 weist zudem mindestens einen mit dem Berührungseingabegerät verbundenen Aktor auf, wobei der Aktor eine Kraft auf das Berührungseingabegerät ausgibt, um dem die Berührungsoberfläche berührenden Benutzer eine haptische Empfindung zu liefern, wobei der Aktor die Kraft aufgrund einer von dem Prozessor ausgegebenen Kraftinformation direkt auf das Berührungseingabegerät ausgibt.

Haptische Rückkopplung ist zudem aus der US 6 429 846, der WO 03/038800 A1, der WO 03/41046 A1 und der WO 02/073587 A1 bekannt, wobei die WO 02/073587 A1 ein haptisches Rückkopplungssystem offenbart, das einen Host-Computer und eine Inter-face-Einrichtung umfasst. Die Interface-Einrichtung ist mittels eines Bussystems mit dem Host-Computer verbunden. Das Bussystem kann bidirektional ausgestaltet sein, um Signale in beide Richtungen zwischen dem Host-Computer und der Interface-Einrichtung zu senden. Das Bussystem kann ein serielles Bussystem sein, wie zum Beispiel RS-232, RS-422, USB oder Midi. Die Interface-Einrichtung umfasst einen Mikroprozessor, einen Aktor und Sensoren.

Aus der DE 197 31 285 A1 ist ein Bedienelement für eine Einrichtung mit mehreren wählbaren Menüs, Funktionen und/oder Funktionswerten bekannt, das eine Oberfläche besitzt, die durch den Bediener erfassbar ist und über die die Auswahl durch eine lokale Bewegung bzw. Berührung der Oberfläche vernehmbar ist. Die Oberfläche ist in ihrer Gestalt entsprechend dem/der gewählten und/oder auswählbaren Menü, Funktion und/oder Funktionswert veränderbar.

Es ist Aufgabe der Erfindung, eine Bedienvorrichtung zur Bedienung einer Recheneinrichtung, insbesondere Bedienvorrichtung zur Bedienung einer Recheneinrichtung zur Steuerung von Funktionen in einem Kraftfahrzeug, anzugeben.

Vorgenannte Aufgabe wird durch eine Bedienvorrichtung zur Bedienung einer Recheneinrichtung, insbesondere durch eine Bedienvorrichtung zur Bedienung einer Recheneinrichtung zur Steuerung von Funktionen in einem Kraftfahrzeug, gelöst, wobei die Bedienvorrichtung ein Display zur optischen Darstellung von Informationen, einen über dem Display angeordneten Touchscreen zur Eingabe von Befehlen durch Berühren des Touchscreens und/oder durch Drücken auf den Touchscreen und einen Aktor zum Bewegen des Touchscreens umfasst, wobei die Bedienvorrichtung eine interne Steuerung zur Ansteuerung des Aktors zum Bewegen des Touchscreens bei Berühren des Touchscreens und/oder bei Drücken auf den Touchscreen in einem für eine haptische Rückkopplung vorgesehenen Bereich des Touchscreens aufweist, und wobei die Bedienvorrichtung eine Schnittstelle zum Einlesen einer geographischen Angabe zur Definition eines Punktes und/oder einer Fläche auf dem Touchscreen und einer der geographischen Angabe zugeordneten Ausgabeanweisung zur Angabe, ob bei einem Berühren des Touchscreens und/oder bei einem Drücken auf den Touchscreen an einer der geographischen Angabe entsprechenden Stelle des Touchscreens eine Mitteilung über das Berühren des Touchscreens und/oder des Drückens auf den Touchscreen von der Bedienvorrichtung auszugeben ist, umfasst. Auf diese Weise wird eine schnelle, besonders für die Bedienung von Kraftfahrzeugen geeignete, haptische Rückkopplung erreicht.

In vorteilhafter Ausgestaltung der Erfindung ist der Aktor zum Bewegen des Touchscreens mittels der internen Steuerung in unterschiedlicher Weise zur Generierung unterschiedlicher haptischer Rückkopplungen ansteuerbar.

In weiterhin vorteilhafter Ausgestaltung der Erfindung ist mittels der Schnittstelle eine der geographischen Angabe zugeordnete Haptikangabe zur Angabe der Art der haptischen Reaktion bei Berühren des Touchscreens und/oder bei Drücken auf den Touchscreen an die Bedienvorrichtung übertragbar.

In weiterhin vorteilhafter Ausgestaltung der Erfindung ist das Display mittels der internen Steuerung ansteuerbar. D.h. insbesondere, dass mittels der internen Steuerung der Bildaufbau auf dem Display erfolgt.

Vorgenannte Aufgabe wird zudem durch ein Kraftfahrzeug mit einer vorgenannte Merkmale umfassenden Bedienvorrichtung gelöst, wobei mittels der Bedienvorrichtung ein Steuergerät bzw. eine Steuerung zur Steuerung einer Klimaanlage des Kraftfahrzeuges, ein Steuergerät bzw. eine Steuerung zur Steuerung eines Navigationssystems des Kraftfahrzeuges, ein Steuergerät bzw. eine Steuerung zur Steuerung eines Infotainmentsystems des Kraftfahrzeuges und/oder ein Steuergerät bzw. eine Steuerung zur Steuerung eines Telefons im Kraftfahrzeug bedienbar ist. Derartige Steuergeräte sind dabei Recheneinrichtungen im vorgenannten Sinne.

Vorgenannte Aufgabe wird zudem durch ein Kraftfahrzeug mit einer vorgenannte Merkmale umfassenden Bedienvorrichtung gelöst, wobei mittels der Bedienvorrichtung eine Klimaanlage des Kraftfahrzeuges, ein Navigationssystem des Kraftfahrzeuges, ein Infotainmentsystem des Kraftfahrzeuges und/oder ein Telefon im Kraftfahrzeug bedienbar ist.

Vorgenannte Aufgabe wird zudem durch eine Bedienvorrichtung, insbesondere eine Bedienvorrichtung für ein Kraftfahrzeug, gelöst, wobei die Bedienvorrichtung ein Display zur optischen Darstellung von Informationen, einen über dem Display angeordneten Touchscreen zur Eingabe von Befehlen durch Berühren des Touchscreens und/oder durch Drücken auf den Touchscreen und einen Aktor zum Bewegen des Touchscreens umfasst, und wobei die Bedienvorrichtung eine Schnittstelle zum Einlesen einer geographischen Angabe zur Definition eines Punktes und/oder einer Fläche auf dem Touchscreen und einer der geographischen Angabe zugeordneten Ausgabeanweisung zur Angabe, ob bei einem Berühren des Touchscreens und/oder bei einem Drücken auf den Touchscreen an einer der geographischen Angabe entsprechenden Stelle des Touchscreens eine Mitteilung über das Berühren des Touchscreens und/oder des Drückens auf den Touchscreen von der Bedienvorrichtung auszugeben ist, aufweist.

In vorteilhafter Ausgestaltung der Erfindung ist mittels der Schnittstelle eine der geographischen Angabe zugeordnete Haptikangabe zur Angabe der Art der haptischen Reaktion bei Berühren des Touchscreens und/oder bei Drücken auf den Touchscreen an die Bedienvorrichtung übertragbar.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:
- Fig. 1: ein Ausführungsbeispiel eines Kraftfahrzeuges in einer Innenansicht,
- Fig. 2: ein Ausführungsbeispiel einer Bedienvorrichtung,
- Fig. 3: einen Querschnitt der Bedienvorrichtung entlang der Schnittlinie A-A gemäß Fig. 2,
- Fig. 4: ein Ausführungsbeispiel einer Schnittstelle,
- Fig. 5: ein Ausführungsbeispiel für die Integration einer Bedienvorrichtung in ein Kraftfahrzeug und
- Fig. 6: ein Ausführungsbeispiel für die Bedienung eines Navigationssystems mittels einer Bedienvorrichtung gemäß Fig. 2, Fig. 3 und Fig. 5.

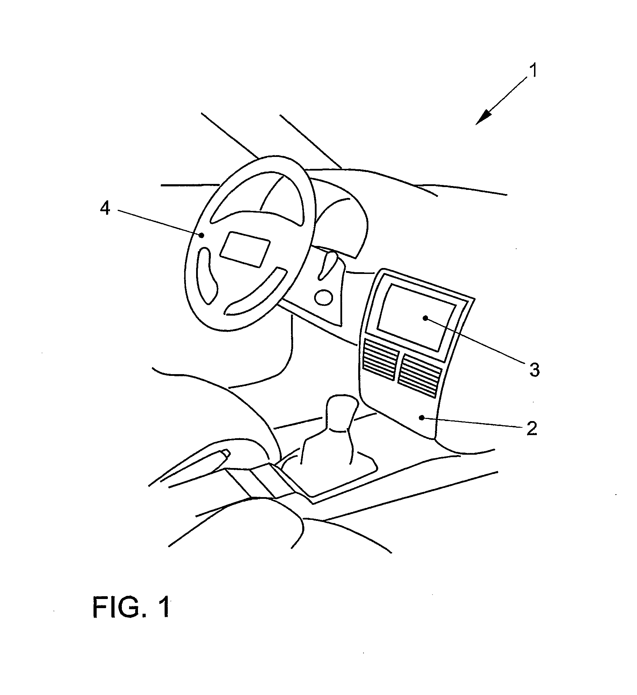

Fig. 1 zeigt ein Kraftfahrzeug 1 in einer Innenansicht. Das Kraftfahrzeug 1 umfasst eine in einer Mittelkonsole 2 angeordnete Bedienvorrichtung 3 zur Bedienung einer Recheneinrichtung zur Steuerung von Funktionen des Kraftfahrzeuges 1, wobei die Bedienvorrichtung ein Display zur optischen Darstellung von Informationen, einen über dem Display angeordneten Touchscreen zur Eingabe von Befehlen durch Berühren des Touchscreens und/oder durch Drücken auf den Touchscreen und einen Aktor zum Bewegen des Touchscreens umfasst. Die Bedienvorrichtung 3 kann auch statt in der Mittelkonsole 2 im Lenkrad 4 angeordnet sein. Es kann auch je eine Bedienvorrichtung in der Mittelkonsole 2 und im Lenkrad 4 vorgesehen sein. Auch andere Anordnungen einer derartigen Bedienvorrichtung sind möglich.

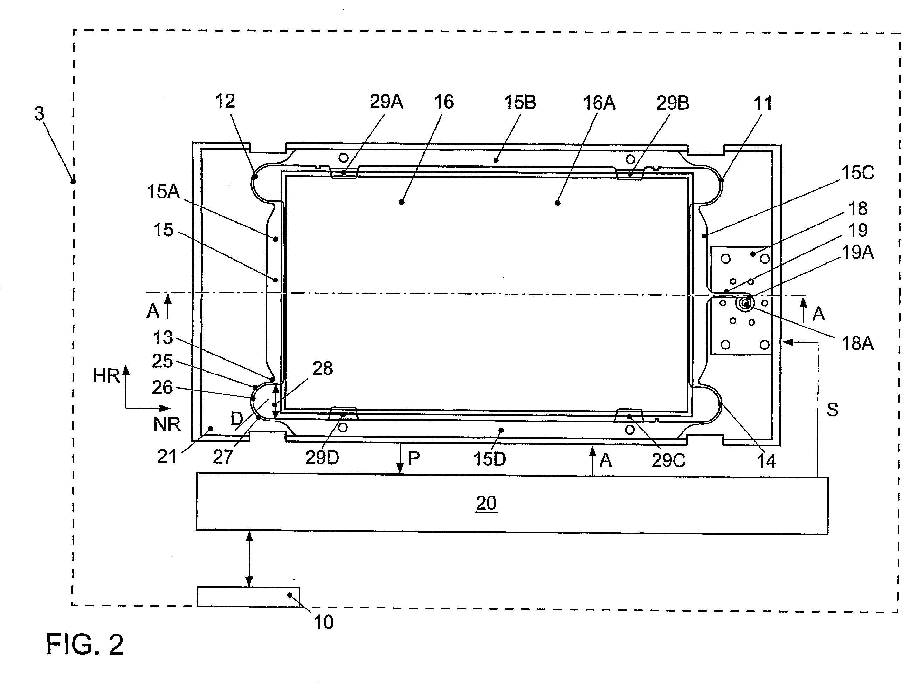

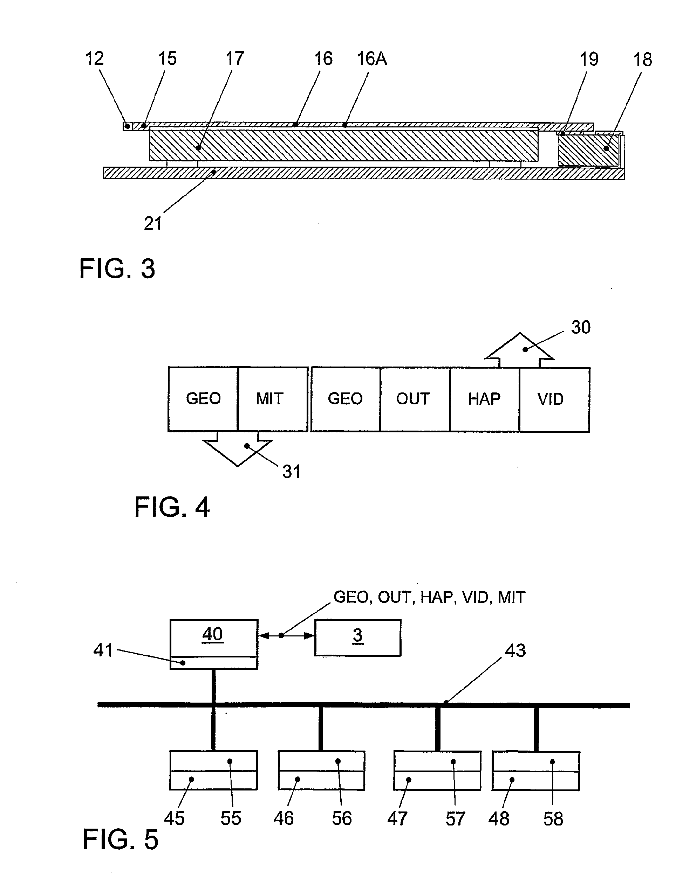

Fig. 2 zeigt die Bedienvorrichtung 3 in einer beispielhaften, besonders für den Einsatz in Kraftfahrzeugen geeigneten, Ausgestaltung in einer Draufsicht. Fig. 3 zeigt einen Querschnitt der Bedienvorrichtung 3 entlang der Schnittlinie A-A gemäß Fig. 2. Die Bedienvorrichtung 3 weist einen über einem Display 17 angeordneten transparenten Touchscreen 16 mit einer Bedienfläche 16A auf. Das Display 17 ist mittels Halterungen 29A, 29B, 29C und 29D mit einem Referenzkörper 21 verbunden. Der Referenzkörper 21 kann z.B. Teil der Mittelkonsole 2 oder des Lenkrades 4 sein.

Der Touchscreen 16 kann einen nicht dargestellten Kraftsensor (oder äquivalenten Sensor) umfassen, mittels dessen ein von einem Bediener ausgeübter Druck auf den Touchscreen 16 ermittelbar ist. Auf diese Weise kann mittels des Touchscreens 16 eine Berührung des Touchscreens 16 durch einen Bediener von einer bewussten Bedienung durch Drücken auf den Touchscreen 16 unterschieden werden. So führt in diesem Falle ein Drücken auf den Touchscreen 16 an einer als Bedienelement angezeigten Stelle zu einer Bedienung des Touchscreens 16 nicht jedoch eine einfache Berührung des Touchscreens 16 durch einen Bediener an einer als Bedienelement angezeigten Stelle. Eine derartige Ausgestaltung ist für den Einsatz in Kraftfahrzeugen vorteilhaft.

Der Touchscreen 16 wird mittels eines Rahmens 15 gehalten. Der Rahmen 15 weist vier U-förmige Federn 11, 12, 13, 14 auf, die mittels Verbindungselementen 15A, 15B, 15C und 15D mit einander verbunden sind. Der Rahmen 15 ist ein Gussteil aus Kunststoff, d.h., die U-förmigen Federn 11, 12, 13, 14 sind zusammen mit den Verbindungselementen 15A, 15B, 15C und 15D aus einem Stück aus Kunststoff gegossen. Der Rahmen ist an den Verbindungselementen 15A und 15C mit dem Touchscreen 16 verklebt. In alternativer oder zusätzlicher Ausgestaltung wird der Touchscreen 16 durch eine Vorspannung der U-förmigen Federn 11, 12, 13, 14 in dem Rahmen gehalten.

Der Rahmen 15 weist ein (flexibles) Verbindungsstück 19 auf, dass mit dem Verbindungselement 15C verbunden ist. Das Verbindungsstück 19 weist eine Verkrümmung 19A auf, die einen exzentrischen Antriebswellenzapfen 18A eines als Elektromotors ausgebildeten Aktors 18 umfasst. Die rotatorische Bewegung des Aktors 18 wird in eine translatorische Bewegung umgewandelt. Der Aktor 18 ist als Gleichstrom(bürsten)motor ausgestaltet. Es sind aber auch andere Ausgestaltungen in Verbindung mit einer anderen Verbindung mit dem Rahmen 15, wie z.B. Piezoaktoren oder so genannte Voicecoils, einsetzbar.

Die U-förmigen Federn 11, 12, 13, 14 weisen je zwei Federarme 25 und 27, eine zwischen den beiden Federarmen 25 und 27 angeordnete Öffnung 28 und einen Verbindungspunkt 26 auf, an dem die beiden Federarme 25 und 27 verbunden sind. Die U-förmigen Federn 11, 12, 13, 14 weisen im wesentlichen parallel zur Öffnung 28 eine Hauptfederkonstante und im wesentlichen senkrecht zur Öffnung 28 eine Nebenfederkonstante auf, wobei die Nebenfederkonstante zumindest das Vierfache der Hauptfederkonstante beträgt. Im vorliegenden Ausführungsbeispiel bezieht sich die Hauptfederkonstante auf eine in Fig. 2 als Hauptrichtung HR bezeichnete Richtung und Nebenfederkonstante auf eine in Fig. 3 als Nebenrichtung NR bezeichnete Richtung. Die Hauptrichtung HR und die Nebenrichtung NR sind orthogonal zueinander aber parallel zur Bedienfläche 16A.

Die U-förmigen Federn 11, 12, 13, 14 weisen eine Dicke D von 0,5mm bis 2mm, im vorliegenden Ausführungsbeispiel von 0,8mm, auf. Die Weite der Öffnung 28 beträgt zwischen 5mm und 30 mm. Die konkrete Weite der Öffnung 28 wird materialabhängig derart gewählt, dass eine gewünschte Hauptfederkonstante erzielt wird. Die Hauptfederkonstante wird dabei derart auf eine Masse des Touchscreens 16 abgestimmt, dass der Touchscreen 16 in Verbindung mit den U-förmigen Federn 11, 12, 13, 14 eine mechanische Eigenfrequenz von 5Hz bis 150Hz, insbesondere eine Eigenfrequenz von 30Hz bis 75Hz, aufweist. Im vorliegenden Ausführungsbeispiel ist vorgesehen, dass die Eigenfrequenz 55Hz beträgt. Eigenfrequenz im Sinne der Erfindung ist dabei insbesondere die kleinste mechanische Resonanzfrequenz des Systems aus den U-förmigen Federn 11, 12, 13, 14 und dem Touchscreen 16.

Der Touchscreen 16 und das Display 17 gemäß Fig. 2 und Fig. 3 sind datentechnisch mit einer internen Steuerung 20 verbunden, von der dem Display 17 ein Signal A mit auf dem Display 17 darzustellenden Informationen übermittelt wird. Von dem Touchscreen 16 erhält die interne Steuerung 20 ein Signal P, das angibt, wo ein Benutzer des Touchscreens 16 den Touchscreen 16 berührt und/oder - sofern vorgesehen - ob der Benutzer derart auf eine als Eingabeposition gekennzeichnete Position auf den Touchscreen 16 drückt, dass dies als Eingabe zu verstehen ist. So kann vorgesehen sein, dass eine Eingabe durch einfaches Berühren des Touchscreens 16 erfolgt. Es kann aber auch vorgesehen sein, dass eine Eingabe nicht schon durch einfaches Berühren des Touchscreens 16 sondern durch (leichtes) Drücken auf den Touchscreen 16 erfolgt. Letzteres ist ein für den Einsatz in Kraftfahrzeugen besonders geeignetes Vorgehen.

Wird der Touchscreen 16 berührt oder wird auf den Touchscreen 16 gedrückt, so wird diese Information P von einer internen Steuerung erkannt, wobei aus der Information P der Ort erkennbar ist an dem der Touchscreen 16 berührt worden ist oder an dem auf den Touchscreen 16 gedrückt worden ist.

Als Bestätigung der Eingabe eines Befehls erzeugt die Steuerung ein mindestens 50 ms andauerndes Steuersignal S, mittels dessen der Aktor 18 kurzzeitig bewegt wird. Ein Befehl kann an zuvor definierten und konfigurierten Stellen der Bedienoberfläche eingegeben werden. Die Ausprägung des ausgegebenen Steuersignals S kann ebenfalls konfiguriert werden. Die einzelnen Komponenten der Bedienvorrichtung sind dabei derart dimensioniert, dass der Touchscreen 16 weniger als 1 mm ausgelenkt wird. Ein Steuersignal S kann z.B. eine einfache Sprungfunktion oder ein Steuersignal zur Erzeugung einer komplexeren Bewegung, wie z.B. vorteilhafterweise einer, insbesondere abklingenden, Schwingung, sein. Bei einer derartigen, insbesondere abklingenden, Schwingung erfolgt die Auslenkung des Touchscreens 16 vorteilhafterweise für eine Dauer zwischen 50 ms und 800 ms, insbesondere für eine Dauer zwischen 100 ms und 400 ms.

Der haptische Mechanismus gemäß des Ausführungsbeispiels in Fig. 2 und Fig. 3 ist für den Einsatz in Kraftfahrzeugen besonders gut geeignet. Die Erfindung ist jedoch nicht auf eine derartige Konfiguration beschränkt. Es können z.B. auch andere Bewegungskonzepte, wie etwa eine vertikale Auslenkung, z.B. durch einen den Touchscreen bewegenden Aktor oder durch eine auf dem Touchscreen angeordnete transparente Aktorenschicht, wie etwa ein Sol-Gel, verwendet werden. Auch die einleitend in Bezug auf den Stand der Technik genannten Schriften offenbaren z. T. verwendbare Antriebskonzepte zur Generierung einer haptischen Rückkopplung.

In vorteilhafter Ausgestaltung ist das Display 17 mittels der internen Steuerung 20 über ein Anzeigesignal A ansteuerbar, so dass mittels der internen Steuerung 20 der Bildaufbau auf dem Display 17 erfolgt.

Die Bedienvorrichtung 3 umfasst eine Schnittstelle 10, über die ein schematisch in Fig. 4 dargestellter Informationsaustausch erfolgt, wobei die dem Pfeil 30 zugeordneten Informationen von der Bedienvorrichtung 3 einlesbare Informationen und die dem Pfeil 31 zugeordneten Informationen von der Bedienvorrichtung 3 ausgebbare Informationen bezeichnen. Die von der Bedienvorrichtung 3 einlesbaren Informationen kann umfassen
- eine geographische Angabe GEO zur Definition eines Punktes und/oder einer Fläche auf dem Touchscreen 16,
- eine der geographischen Angabe GEO zugeordnete Ausgabeanweisung OUT zur Angabe, ob bei einem Berühren des Touchscreens 16 und/oder bei einem Drücken auf den Touchscreen 16 an einer der geographischen Angabe GEO entsprechenden Stelle des Touchscreens 16 eine Mitteilung MIT über das Berühren des Touchscreens 16 und/oder des Drückens auf den Touchscreen 16 von der Bedienvorrichtung 3 auszugeben ist,
- (optional) eine der geographischen Angabe GEO zugeordnete Haptikangabe HAP zur Angabe der Art der haptischen Reaktion bei Berühren des Touchscreens 16 und/oder bei Drücken auf den Touchscreen 16 und
- ein der geographischen Angabe GEO zugeordnetes Bildsignal VID zur Darstellung auf dem Display 17.

Das Bildsignal VID und das haptische Steuersignal S können auch mit Hilfe unterschiedlicher Steuereinheiten dargestellt werden. Insbesondere können auch die Bildsignalausgabe und die Eingabeeinheit physikalisch getrennt werden.

Die von der Bedienvorrichtung 3 ausgebbaren Informationen umfassen die Mitteilung MIT über das Berühren des Touchscreens.16 und/oder des Drückens auf den Touchscreen 16 und ggf. die entsprechende geographischen Angabe GEO, wo das Berühren des Touchscreens 16- und/oder des Drückens auf den Touchscreen 16 erfolgt ist.

Mittels der Bedienvorrichtung 3 sind - wie in Fig. 5 dargestellt - eine Klimaanlage 45 des Kraftfahrzeuges 1, ein Navigationssystem 46 des Kraftfahrzeuges 1, ein Infotainmentsystem 47 des Kraftfahrzeuges 1 und/oder ein Telefon 48 im Kraftfahrzeug 1 bedienbar. Dazu ist die Bedienvorrichtung 3 (über die Schnittstelle 10) mit einem Anzeigesteuergerät 40 verbunden, das über eine Schnittstelle 41 und über ein Bussystem 43 datentechnisch mit der Klimaanlage 45 bzw. einer der Klimaanlage 45 zugeordneten Steuerung 55, mit dem Navigationssystem 46 bzw. einer dem Navigationssystem 46 zugeordneten Steuerung 56, mit dem Infotainmentsystem 47 bzw. einer dem Infotainmentsystem 47 zugeordneten Steuerung 57 und/oder mit dem Telefon 48 bzw. einer dem Telefon 48 zugeordneten Steuerung 58 verbunden ist. Über die Schnittstelle 40 ist mittels eines Protokolls kommunizierbar, das ein Operationsfeld zur Identifikation einer mittels der den Betrieb des Kraftfahrzeuges betreffenden Information auszuführenden Aufgabe, ein Datenfeld mit einem Wert für die den Betrieb des Kraftfahrzeuges betreffende Information und ein ID-Feld zur Identifikation der den Betrieb des Kraftfahrzeuges betreffenden Information umfasst.

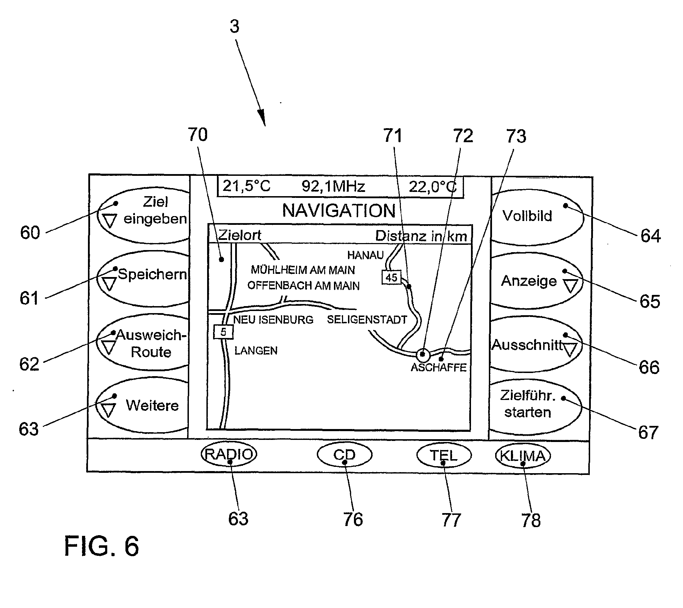

Zur Bedienung der Klimaanlage 45, des Navigationssystems 46, des Infotainmentsystems 47 bzw. des Telefons 48 sind mittels der Bedienvorrichtung 3 - wie in Fig. 6 am Beispiel des Navigationssystems 46 dargestellt - Bedienelemente 60, 61, 62, 63, 64, 65, 66, 67, 75, 76, 77, 78 darstellbar. Dabei kann das Navigationssystem 46 durch Drücken auf die Bedienelemente 60, 61, 62, 63, 64, 65, 66, 67 bedient werden. Bei Drücken eines der Bedienelemente 60, 61, 62, 63, 64, 65, 66, 67 erzeugt die interne Steuerung 20 eine haptische Rückkopplung, die es einem Bediener, der auf eines der Bedienelemente 60, 61, 62, 63, 64, 65, 66, 67 gedrückt hat, ermöglicht zu erkennen, ob eine Bedienung des Bedienelementes 60, 61, 62, 63, 64, 65, 66 bzw. 67 erfolgt ist. Zudem übermittelt die interne Steuerung 20 der Anzeigesteuerung 40, welches Bedienelement 60, 61, 62, 63, 64, 65, 66 bzw. 67 gedrückt worden ist. Wird z.B. Bedienelement 62 gedrückt, so übermittelt die Anzeigesteuerung 40 der internen Steuerung 20 ein Untermenü zur Eingabe einer Ausweichroute und die Lage der darin vorgesehen Bedienelemente. Sind alle Angaben für eine Ausweichroute mittels der Bedienvorrichtung 3 eingegeben, so überträgt die Anzeigesteuerung 40 diese Angaben an das Navigationssystem 46, das die entsprechende Ausweichroute berechnet.

Durch Drücken des Bedienelementes 75 ist ein Untermenü zur Bedienung eines dem Infotainmentsystem 47 zugeordneten Radios aufrufbar, durch Drücken des Bedienelementes 76 ist ein Untermenü zur Bedienung eines dem Infotainmentsystem 47 zugeordneten CD-Wechslers aufrufbar, durch Drücken des Bedienelementes 77 ist ein Untermenü zur Bedienung des Telefons 48 aufrufbar und durch Drücken des Bedienelementes 78 ist ein Untermenü zur Bedienung der Klimaanlage 45 aufrufbar.

Es kann vorgesehen sein, dass der Aktor 18 - gesteuert durch die interne Steuerung 20 - bei Berührung der Bedienelemente 60, 61, 62, 63, 64, 65, 66, 67, 75, 76, 77, 78 derart vibriert, dass es sich für einen Bediener anfühlt, als ob Bedienelemente 60, 61, 62, 63, 64, 65, 66, 67, 75, 76, 77, 78 reliefartig über andere Bereiche des Touchscreens 16 hinausragen. Informationen über diese unterschiedlichen haptischen Rückkopplungen werden an die interne Steuerung 20 als Haptikangabe HAP übertragen. Es kann auch vorgesehen sein, dass bei der Bedienung der Bedienelemente 60, 61, 62, 63, 64, 65, 66, 67 eine andere haptische Rückkopplung erzeugt wird als bei der Bedienung der Bedienelemente 75, 76, 77, 78. Informationen über diese unterschiedlichen haptischen Rückkopplungen werden ebenfalls an die interne Steuerung 20 als Haptikangabe HAP übertragen.

In Fig. 6 ist mittels der Bedienvorrichtung 3 zudem eine Karte 70 mit Straßen 71, Kreisen 72 zur Darstellung von Ortschaften sowie die entsprechenden Ortsnamen 73 dargestellt. Es kann vorgesehen sein, dass der Aktor 18 gesteuert durch die interne Steuerung 20 bei Berührung der Straßen 71 und/oder Kreise 72 derart vibriert, dass es sich für einen Bediener anfühlt, als ob Straßen 71 und/oder Kreise 72 reliefartig über andere Bereiche des Touchscreens 16 hinausragen. Informationen über diese unterschiedlichen haptischen Rückkopplungen werden ebenfalls an die interne Steuerung 20 als Haptikangabe HAP übertragen.

Außer der Stärke der haptischen Rückkopplung kann auch deren Art, deren Dauer und/oder deren Auslösezeitpunkt unterschiedlich gestaltet und als Haptikangabe HAP übertragen werden.

Es kann vorgesehen sein, dass die Angaben wie die geographische Angabe GEO, die Haptikangabe HAP und die Ausgabeanweisung OUT in der Bedienvorrichtung 3 abgespeichert und einem Identitätsparameter, z.B. für ein Untermenü, zugeordnet sind. In diesem Falle ist vorgesehen, dass dieser Identitätsparameter über die Schnittstelle 30 eingelesen wird. Eine solche Übertragung eines Identitätsparameters, der sich auf eine gespeicherte Zuordnung einer geographischen Angabe GEO und einer Ausgabeanweisung OUT sowie optional einer Haptikangabe HAP bezieht, soll der Übertragung einer geographischen Angabe GEO und einer zugeordneten Ausgabeanweisung OUT sowie optional einer zugeordneten Haptikangabe HAP im Sinne der Ansprüche gleichstehen.

### Bezugszeichenliste

- 1: Kraftfahrzeug
- 2: Mittelkonsole
- 3: Bedienvorrichtung
- 4: Lenkrad
- 10, 41: Schnittstelle
- 11,12, 13, 14: Feder
- 15: Rahmen
- 15A, 15B, 15C,15D: Verbindungselement
- 16: Touchscreen
- 16A: Bedienfläche
- 17: Display
- 18: Aktor
- 18A: Antriebswellenzapfen
- 19: Verbindungsstück
- 19A: Verkrümmung
- 20: interne Steuerung
- 21: Referenzkörper
- 25, 27: Federarm
- 26: Verbindungspunkt
- 28: Öffnung
- 29A, 29B, 29C, 29D: Halterung
- 30, 31: Pfeil
- 40: Anzeigesteuergerät
- 43: Bussystem
- 45: Klimaanlage
- 46: Navigationssystem
- 47: Infotainmentsystem
- 48: Telefon
- 55, 56, 57, 58 60, 61, 62, 63, 64, 65, 66, 67,: Steuerung
- 75, 76, 77, 78: Bedienelement
- 70: Karte
- 71: Straße
- 72: Kreis
- 73: Ortsname

- A, P: Signal
- GEO: geographische Angabe
- HAP: Haptikangabe
- HR: Hauptrichtung
- MIT: Mitteilung über das Berühren des Touchscreens und/oder des Drückens auf den Touchscreen
- NR: Nebenrichtung
- OUT: Ausgabeanweisung
- S: Steuersignal
- VID: Bildsignal

## Patentansprüche

1. Bedienvorrichtung (3) zur Bedienung einer Recheneinrichtung (55, 56, 57, 58), insbesondere Bedienvorrichtung (3) zur Bedienung einer Recheneinrichtung (55, 56, 57, 58) zur Steuerung von Funktionen in einem Kraftfahrzeug (1), wobei die Bedienvorrichtung (3) ein Display (17) zur optischen Darstellung von Informationen, einen über dem Display (17) angeordneten Touchscreen (16) zur Eingabe von Befehlen durch Berühren des Touchscreens (16) und/oder durch Drücken auf den Touchscreen (16) und einen Aktor (18) zum Bewegen des Touchscreens (16) umfasst, und wobei die Bedienvorrichtung (3) eine interne Steuerung (20) zur Ansteuerung des Aktors (18) zum Bewegen des Touchscreens (16) bei Berühren des Touchscreens (16) und/oder bei Drücken auf den Touchscreen (16) in einem für eine haptische Rückkopplung vorgesehenen Bereich des Touchscreens (16) aufweist, **dadurch gekennzeichnet, dass** die Bedienvorrichtung (3) eine Schnittstelle (10) zum Einlesen
- einer geographischen Angabe (GEO) zur Definition eines Punktes und/oder einer Fläche auf dem Touchscreen (16)
und
- einer der geographischen Angabe (GEO) zugeordneten Ausgabeanweisung (OUT) zur Angabe, ob bei einem Berühren des Touchscreens (16) und/oder bei einem Drücken auf den Touchscreen (16) an einer der geographischen Angabe (GEO) entsprechenden Stelle des Touchscreens (16) eine Mitteilung (MIT) über das Berühren des Touchscreens (16) und/oder des Drückens auf den Touchscreen (16) von der Bedienvorrichtung (3) auszugeben ist,
aufweist.

2. Bedienvorrichtung (3) nach Anspruch 1, **dadurch gekennzeichnet, dass** der Aktor (18) zum Bewegen des Touchscreens (16) mittels der internen Steuerung (20) in unterschiedlicher Weise zur Generierung unterschiedlicher haptischer Rückkopplungen ansteuerbar ist.

3. Bedienvorrichtung (3) nach Anspruch 1 oder 2, **dadurch gekennzeichnet, dass** mittels der Schnittstelle (10) eine der geographischen Angabe (GEO) zugeordnete Haptikangabe (HAP) zur Angabe der Art der haptischen Reaktion bei Berühren des Touchscreens (16) und/oder bei Drücken auf den Touchscreen (16) an die Bedienvorrichtung (3) übertragbar ist.

4. Bedienvorrichtung (3) nach Anspruch 1, 2 oder 3, **dadurch gekennzeichnet, dass** mittels der Schnittstelle (10) eine der geographischen Angabe (GEO) zugeordnete Mitteilung (MIT) über das Berühren des Touchscreens (16) und/oder des Drückens auf den Touchscreen (16) ausgebbar ist.

5. Kraftfahrzeug (1), **dadurch gekennzeichnet, dass** es eine Bedienvorrichtung (3) nach Anspruch 1, 2, 3 oder 4 aufweist.

6. Kraftfahrzeug (1) nach Anspruch 5, **dadurch gekennzeichnet, dass** die Recheneinrichtung (55, 56, 57, 58) eine Steuerung (55) zur Steuerung einer Klimaanlage des Kraftfahrzeuges (1), eine Steuerung (56) zur Steuerung eines Navigationssystems des Kraftfahrzeuges (1), eine Steuerung (57) zur Steuerung eines Infotainmentsystems des Kraftfahrzeuges (1), eine Steuerung (58) zur Steuerung eines Telefons im Kraftfahrzeug (1) oder eine Steuerung (58) zur Steuerung einer anderen Komponente ist.

7. Kraftfahrzeug (1) nach Anspruch 5, **dadurch gekennzeichnet, dass** mittels der Bedienvorrichtung (3) eine Klimaanlage des Kraftfahrzeuges (1), ein Navigationssystem des Kraftfahrzeuges (1), ein Infotainmentsystem des Kraftfahrzeuges (1) und/oder ein Telefon im Kraftfahrzeug (1) bedienbar ist.

## Claims

1. Operating device (3) for operating a computing device (55, 56, 57, 58), in particular operating device (3) for operating a computing device (55, 56, 57, 58) for controlling functions in a motor vehicle (1), the operating device (3) comprising a display (17) for optically displaying information, a touchscreen (16) which is arranged over the display (17) and is intended to input commands by virtue of the touchscreen (16) being touched and/or by virtue of the touchscreen (16) being pressed, and an actuator (18) for moving the touchscreen (16), and the operating device (3) having an internal controller (20) for controlling the actuator (18) to move the touchscreen (16) when the touchscreen (16) is touched and/or when the touchscreen (16) is pressed in a region of the touchscreen (16) provided for haptic feedback, **characterized in that** the operating device (3) has an interface (10) for reading in
- a geographical indication (GEO) for defining a point and/or an area on the touchscreen (16)
and
- an output instruction (OUT) which is associated with the geographical indication (GEO) and is intended to indicate whether, when the touchscreen (16) is touched and/or when the touchscreen (16) is pressed at a point of the touchscreen (16) corresponding to the geographical indication (GEO), a notification (MIT) relating to the touching of the touchscreen (16) and/or the pressing of the touchscreen (16) should be output by the operating device (3).

2. Operating device (3) according to Claim 1, **characterized in that** the actuator (18) for moving the touchscreen (16) can be controlled using the internal controller (20) in a different manner for the purpose of generating different haptic feedback.

3. Operating device (3) according to Claim 1 or 2, **characterized in that** a haptic indication (HAP) which is associated with the geographical indication (GEO) and is intended to indicate the type of haptic reaction when the touchscreen (16) is touched and/or when the touchscreen (16) is pressed can be transmitted to the operating device (3) using the interface (10).

4. Operating device (3) according to Claim 1, 2 or 3, **characterized in that** a notification (MIT) which is associated with the geographical indication (GEO) and relates to the touching of the touchscreen (16) and/or the pressing of the touchscreen (16) can be output using the interface (10).

5. Motor vehicle (1), **characterized in that** it has an operating device (3) according to Claim 1, 2, 3 or 4.

6. Motor vehicle (1) according to Claim 5, **characterized in that** the computing device (55, 56, 57, 58) is a controller (55) for controlling an air-conditioning system of the motor vehicle (1), a controller (56) for controlling a navigation system of the motor vehicle (1), a controller (57) for controlling an infotainment system of the motor vehicle (1), a controller (58) for controlling a telephone in the motor vehicle (1) or a controller (58) for controlling another component.

7. Motor vehicle (1) according to Claim 5, **characterized in that** an air-conditioning system of the motor vehicle (1), *a navigation system of the motor vehicle (1), an infotainment system of the motor vehicle (1) and/or a telephone in the motor vehicle (1) can be operated using the operating device (3).

## Revendications

1. Dispositif de commande (3) servant à commander un ordinateur (55, 56, 57, 58), notamment dispositif de commande (3) servant à commander un ordinateur (55, 56, 57, 58) servant à commander des fonctions dans un véhicule à moteur (1), le dispositif de commande (3) comportant un affichage (17) servant à représenter optiquement des informations, un écran tactile (16) disposé au-dessus de l'affichage (17) pour saisir des instructions par effleurement de l'écran tactile (16) et/ou par pression sur l'écran tactile (16) et un actionneur (18) servant à déplacer l'écran tactile (16) et le dispositif de commande (3) comportant un élément de commande interne (20) servant à commander l'actionneur (18) en vue de déplacer l'écran tactile (16) en cas d'effleurement de l'écran tactile (16) et/ou de pression sur l'écran tactile (16) dans une zone de l'écran tactile (16) prévue pour une rétroaction haptique, **caractérisé en ce que** le dispositif de commande (3) comprend une interface (10) pour lire :
- une donnée géographique (GEO) servant à définir un point et/ou une surface sur l'écran tactile (16) ; et
- une indication d'envoi (OUT) associée à la donnée géographique (GEO) servant à indiquer si, lors de l'effleurement de l'écran tactile (16) et/ou lors d'une pression appliquée sur l'écran tactile (16), un message (MIT) est envoyé par le dispositif de commande (3) à un point de l'écran tactile (16) correspondant à la donnée géographique (GEO) via l'effleurement de l'écran tactile (16) et/ou la pression appliquée sur l'écran tactile (16).

2. Dispositif de commande (3) selon la revendication 1, **caractérisé en ce que** l'actionneur (18) peut être commandé pour déplacer l'écran tactile (16) à l'aide de l'élément de commande interne (20) de différentes façons pour générer différentes rétroactions haptiques.

3. Dispositif de commande (3) selon la revendication 1 ou 2, **caractérisé en ce qu'**une donnée haptique (HAP) associée à la donnée géographique (GEO) peut être transmise au dispositif de commande (3) à l'aide de l'interface (10) pour indiquer le type de réaction haptique obtenue lors de l'effleurement de l'écran tactile (16) et/ou lors de la pression exercée sur l'écran tactile (16).

4. Dispositif de commande (3) selon la revendication 1, 2 ou 3, **caractérisé en ce qu'**un message (MIT) associé à la donnée géographique (GEO) peut être émis à l'aide de l'interface (10) via l'effleurement de l'écran tactile (16) et/ou la pression exercée sur l'écran tactile (16).

5. Véhicule à moteur (1), **caractérisé en ce qu'**il comporte un dispositif de commande (3) selon la revendication 1, 2, 3 ou 4.

6. Véhicule à moteur (1) selon la revendication 5, **caractérisé en ce que** l'ordinateur (55, 56, 57, 58) comporte un élément de commande (55) pour commander une installation de climatisation du véhicule à moteur (1), un élément de commande (56) pour commander un système de navigation du véhicule à moteur (1), un élément de commande (57) pour commander un système d'information et divertissement du véhicule à moteur (1), un élément de commande (58) pour commander un téléphone se trouvant dans le véhicule à moteur (1) ou un élément de commande (58) pour commander un autre composant.

7. Véhicule à moteur (1) selon la revendication 5, **caractérisé en ce qu'**une installation de climatisation du véhicule à moteur (1), un système de navigation du véhicule à moteur (1), un système d'information et divertissement du véhicule à moteur (1) et/ou un téléphone se trouvant dans le véhicule à moteur (1) peuvent être utilisés à l'aide du dispositif de commande (3) .
